# EUROPÄISCHE PATENTSCHRIFT

(11) **EP 1 606 424 B1**
(45) Veröffentlichungstag und Bekanntmachung des Hinweises auf die Patenterteilung: **19.07.2006**
(21) Anmeldenummer: 04718619.2
(22) Anmeldetag: 09.03.2004
(51) Int. Cl.: C22B 11/00

(54) **VERFAHREN ZUR FEINSTRAFFINATION VON GOLD**
METHOD FOR THE FINE REFINEMENT OF GOLD
PROCEDE DE RAFFINAGE FIN DE L'OR

(30) Priorität: 10.03.2003 DE 10310699
(43) Veröffentlichungstag der Anmeldung: 21.12.2005
(73) Patentinhaber: OTB Oberflächentechnik in Berlin GmbH & Co., 12277 Berlin (DE)
(72) Erfinder: HERRMANN, Sigrid, 12487 Berlin (DE); LANDAU, Uwe, 14169 Berlin (DE)
(74) Vertreter: Tilger, Bernhard
(86) Internationale Anmeldenummer: PCT/DE2004/000466
(87) Internationale Veröffentlichungsnummer: WO 2004/081245

(56) Entgegenhaltungen:
- GB-A- 1 090 294
- US-A- 2 266 155
- US-A- 4 670 052
- PATENT ABSTRACTS OF JAPAN Bd. 0182, Nr. 96 (C-1209), 6. Juni 1994 (1994-06-06) & JP 6 057348 A (SUMITOMO METAL MINING CO LTD), 1. März 1994 (1994-03-01)
- DATABASE EPODOC EUROPEAN PATENT OFFICE, THE HAGUE, NL; XP002290885 & CN 1 118 014 A (LIU Q) 6. März 1996 (1996-03-06)

## Beschreibung

Die vorliegende Erfindung betrifft ein Verfahren zur Feinstraffination metallisch verunreinigten Goldes Dieses Verfahren ist insbesondere zui Raffination pulverförmigen, zerkleinerten, kleinteiligen, folienartigen oder drahtförmigen Goldes geeignet.

Im Vordergrund der Goldgewinnung steht die Goldabtrennung aus Erzen oder aus Goldrücklaufmaterialien. Der Goldabtrennung folgt dann zunächst eine Grobreinigung des Goldes bis zu einer Reinheit von 98 - 99 %, der sich eine Feinstreinigung bis zu einer Reinheit von 99,96 - 99,995 oder gar 99,999 % anschließt. Abhängig vom Ausgangsmaterial und der gewünschten Endreinheit müssen die Reinigungsschritte hierbei jeweils geeignet gewählt werden. Universalverfahren für die Abreicherung sämtlicher ale Verunreinigungen enthaltenen Elemente und sämtlicher Konzentrationsbereiche sind nicht bekannt.

Bei Recyclingmaterial aus Elektronikschrott, wie z.B. Kontaktmaterial, Leiterplatten, Steckverbinder oder dergleichen, das eine zunehmend größere wirtschaftliche Bedeutung erlangt, treten bevorzugt Cu, Ni, Ag, Pd, Zn, Sn, Pb, Fe, Cr, Be, Co u.a. als Verunreinigungen auf. Diese Elemente müssen daher bei einer Rückgewinnung des Goldes möglichst problemlos und vollständig aus dem Gold entfernt werden. Auf Grund der chemischen Ähnlichkeit des Goldes mit Silber und Palladium erweist sich dies herkömmlicherweise insbesondere jedoch bei diesen beiden Edelmetallen und ihren Verbindungen als recht schwierig.

Die JP-A-6 057 348 offenbart ein Verfahren zur Gewinnung von Gold hoher Reinheit aus einem entsilberten Silberelektrolyse-Schlamm durch Extraktion mit Salzsäure und Wasserstoffperoxid zum Lösen des Goldes, anschließende Feinstfiltration der chloridischen Goldläsung und Fällung des Goldes mit Schwefeldioxid und schwefliger Säure bis zu einem Endpunkt von 80 - 95 %. Durch anschließendes Waschen des Goldes egibt sich eine Reinheit von 99,99 %.

Die GB-A-1 090 294 beschreibt ein Verfahren zur Rückgewinnung von Palladium, Platin oder Gold aus einer edelmetallhaltigen Katalysatorbeschichtung, wobei das Metall zunächst in einem wässrigen Medium mit Salzsäure und Wasserstoffperoxid gelöst und anschließend ausgefällt und gewaschen wird. Das wässrige Medium umfaßt hierbei zumindest 5 Gew.-% Salzsäure und zumindest 0,2 Gew.-% Wasserstoffperoxid, wobei die bevorzugten Konzentrationsbereiche bei 12 - 35 Gew.-% bzw. 0,2 - 25 Gew.-% liegen. Beim Lösevorgang wird ein Ansteigen der Reaktionstemperatur auf mehr als etwa 80 °C durch geeignete Kühlmaßnahmen verhindert, um die Bildung "schädlicher" Abgase, wie z.B. Chlordioxid, zu vermeiden.

Die UA-A-4 670 052 beschreibt die Rückgewinnung von Gold aus edelmetallhaltigen elektrolytischen Schlämmen durch Lösen der Edelmetalle (Gold Silber und Metalle der Platingruppe) mit Salzsäure und Wasserstoffperoxid, Abscheiden von unlöslichem Silberchlorid, selektives Fällen vun Gold durch Reduktion mit Schwefeldioxid unter Anwesenheit von Natriumlonen und Waschen des gefällten Goldes. Die Reaktionstemperatur beim Lösevorgang beträgt vorzugsweise 50 - 100 °C, um die Bildung "schädicher" Abgase zu vermeiden.

Die Aufgabe der vorliegenden Erfindung besteht in der Schaffung eines einfachen und kostengünstigen Verfahrens zur Feinstraffination metallisch verunreinigten Goldes. Das gesuchte Raffinationsverfahren soll insbesondere eine problemlose Abreicherung der oben genannten metallischen Verunreinigungen ermöglichen und daher für eine Raffination von Recyclingmaterial aus Elektronikschrott besonders gut geeignet sein, wie es beispielsweise durch Ablösen mit entsprechenden Cyanidlösungen und anschließender Goldelektrolyse gewonnen wird. Es soll insbesondere zur Raffination pulverförmigen, zerkleinerten, kleinteiligen, folienartigen oder drahtförmigen Goldes geeignet sein. Das gesuchte Raffinatinnsverfahren soll durch eine günstige Nutzung von möglichst einfachen, apparativ unaufwendigen und problemlos zu automatisierenden chemischen Verfahren und den Einsatz von handelsüblichen, preiswerten Chemikalien gekennzeichnet sein und damit eine möglichst einfache und wirtschaftliche Betriebsweise ermöglichen. Durch eine möglichst geringe Umweltbelastung und einen Recyclingbetrieb für die eingesetzten Chemikalien soll es zudem auch ökologisch möglichst unbedenklich sein.

Diese Aufgabe wird erfindungsgemäß durch ein Raffinationsverfahren gemäß Anspruch 1 gelöst. Bevorzugte Verfahrensvarianten sind den zugehörenden Unteransprüchen zu entnehmen.

Bei dem erfindungsgemäßen Raffinationsverfahren wird das Gold zunächst in Salzsäure und Wasserstoffperoxid gelöst, wobei insbesondere Salzsäure mit einer Konzentration von etwa 18 - 36 % und Wasserstoffperoxid mit einer Konzentration von etwa 17 - 35 % verwendet wird. Dieser Vorgang kann durch durch getrennte Zudosierung der genannten Substanzen und/oder über deren Mischungsverhältnis und/oder ihre Konzentration bedarfsgerecht gesteuert werden. Hierbei erweist sich ein Mischungsverhältnis von etwa 1:1 als besonders günstig, da sich mit diesem Wert die höchste Abreicherung an Verunreinigungen erreichen lässt. Durch sukzessives Zudosieren von Salzsäure und Wasserstoffperoxid lässt sich Gold mit zunehmend höherer Reinheit gewinnen.

Zur Herstellung nahezu gleicher Reaktionsbedingungen beim Lösen kann das zu raffinierende Gold gegebenenfalls zuvor in Chargen mit im wesentlicher gleicher Größe, Korngröße oder Zusammensetzung aufgeteilt werden, die dann separat behandelt werden. Diese Aufteilung kann beispielsweise durch eine einfache Siebanalyse erfolgen. Gegebenenfalls ist das Gold zuvor erst noch entsprechend zu zerkleinem.

Das Lösen des Goldes erfolgt vorzugsweise in einer Säuleneinrichtung. Je nach Größe, Korngröße oder Goldkonzentration werden hierbei zur Optimierung des Lösungsvorgangs Säuleneinrichtungen mit unterschiedlichen Durchmessern und/oder unterschiedlich gestalteten Ausläufen verwendet. Aus der Säuleneinrichtung können durch Abtrennung einzelner Fraktionen auf einfache Art und Weise Goldlösungen mit unterschiedlicher Reinheit gewonnen und anschließend zur Rückgewinnung des Goldes auf die nachstehend beschriebene erfindungsgemäße Art und Weise weiterbehandelt werden.

Beim Lösen des Goldes wird durch die Reaktion von Salzsäure mit Wasserstoffperoxid Chlor frei, das als Abgas abgeführt und ordnungsgemäß entsorgt werden muß. Eine bekannte Entsorgungsmöglichkeit besteht beispielsweise darin, das freiwerdende chlohaltige Abgas durch Einleitung in Natronlauge vom Chlor zu reinigen. Im vorliegenden Fall wird jedoch erfindungsgemäß vorgeschlagen, das chlorhaltige Abgas über eine Filtereinrichtung mit feinkömigem Goldpulver oder dergleichen zu leiten und das Chlor dort bei entsprechenden Reaktionsbedingungen mit dem feinkörnigen Gold zu Goldchlorid reagieren zu lassen. Um ein eventuelles Verstopfen der Filtereinrichtung zu vermeiden, wird diese hierbei vorzugsweise einfach mit konzentrierter Salzsäure angefeuchtet. Durch diese Umsetzung des Chlors zu Goldchlorid wird nicht nur das Abgas zuverlässig von Chlor gereinigt, sondern man erhält auch noch eine hochkonzentrierte Goldlösung, aus der sich auf die nachstehend noch beschriebene Art und Weise Gold mit einer Reinheit von 99,994 - 99,999 % gewinnen läßt.

Das Lösen des Goldes in Salzsäure und Wasserstoffperoxid verläuft exotherm, wobei Reaktionstemperaturen von mehr als etwa 100 °C auftreten. Bei diesen hohen Temperaturen wird ein Teil der im Gold enthaltenen unerwünschten Verunreinigungen aus dem Gold abgereichert und zusammen mit dem freiwerdenden Chlor als Abgas abgeführt. Dieser Einfluß der hohen Reaktionstemperaturen auf die Abreicherung der Verunreinigungen, insbesondere Nickel, Silber, Palladium, Zink, Zinn, Blei, Eisen, Chrom und Spuren an Be, kann unter Ausnutzung der unterschiedlichen physikalischen Eigenschaften der einzelnen Verunreinigungen durch entsprechende wärmetechnische Maßnahmen, wie z.B. eine gezielte Wärmezufuhr und/oder eine Beeinflussung der Wärmeabfuhr durch Wärmeisolationsmaßnahmen, vorteilhaft ausgenutzt und in gewissen Grenzen bedarfsgerecht gesteuert werden. Auf Grund des hierbei erforderlichen niedrigen Temperaturniveaus, das zudem auch noch ohne eine gegebenenfalls zusätzlich erforderliche externe Wärmezufuhr durch die beim Lösen freiwerdende Reaktionswärme praktisch automatisch erzeugt wird, und der hohen erreichbaren Abreicherungsraten ist der beschriebene Effekt insbesondere für eine wirtschaftliche Abreicherung von Silber von besonderer Bedeutung, da sich Silber bekanntermaßen ansonsten nur recht aufwendig aus entsprechenden Goldlegierungen abtrennen lässt. Üblicherweise wird hierfür das sogenannte Miller-Verfahren eingesetzt, bei dem das Silber durch Chlorgas in flüssiges, auf dem geschmolzenen Gold schwimmendes Silberchlorid überführt wird. Dieses Verfahren arbeitet jedoch bei einem wesentlich höheren Temperatumiveau von etwa 1000 °C und ist daher bereits aus diesem Grund wirtschaftlich entsprechend ungünstiger als das vorliegende erfindungsgemäße Verfahren.

Die beschriebene Umsetzung des Chlors zu Goldchlorid in der Filtereinrichtung erfolgt unter starker Wärmeentwicklung. Die in dem Gasstrom enthaltenen metallischen Verunreinigungen werden bei den sich einstellenden hohen Reaktionstemperaturen nicht zusammen mit dem Chlor aus dem Gasstrom abgereichert und von der Filtereinrichtung zurückgehalten, sondern verbleiben stattdessen im wesentlichen in dem vom Chlor gereinigten Gasstrom. Dieser wird daher nach dem Passieren der Filtereinrichtung durch eine geeignete Wascheinrichtung, wie z.B. ein mit Wasser gefülltes Waschgefäß, geleitet, in der die metallischen Verunreinigungen aus dem Gasstrom ausgewaschen und bei Bedarf mit bekannten Methoden zurückgewonnen werden.

Das gelöste Gold wird anschließend durch Zudosierung eines geeigneten Reduktionsmittels, wie z.B. Oxalsäure, Eisen-II-sulfat, Hydrazin oder Salze des Hydrazins, insbesondere jedoch eine Natriumbisulfitlösung, aus der salzsauren Goldlösung ausgefällt. Die Fällung des Goldes wird hierbei durch Vermeidung eines Überschusses an Natriumbisulfitlösung begünstigt. Das Ausfällen kann hierbei je nach Reaktionsbedingungen in unterschiedlichen Formen erfolgen. Bei nicht geeigneter Fällungsform fällt das Gold in groben Kristallen aus, es kristallisiert nach, die verwendete Apparatur wird mit einer festen Goldschicht überzogen, die bevorzugt Verunreinigungen umfasst. Bei günstigeren Reaktionsbedingungen kann das Gold jedoch auch klumpig oder feinkristallin-pulvrig ausfallen. Besonders gute Ergebnisse ergeben sich, wenn die Natriumbisulfitlösung mit hoher Geschwindigkeit in die Goldlösung eingerührt wird. Man erhält hierdurch pulverförmiges Gold, das praktisch keine Verunreinigungen mehr einschließt und sich gut filtrieren und waschen lässt. Bei günstigeren Reaktionsbedingungen kann das Gold auch feinkristallin ausfallen.

Die Fällung des Goldes aus der stark salzsauren Lösung hat den Vorteil, dass ein großer Anteil der noch vorhandenen Verunreinigungen als lösliche Chlorokomplexe, wie z.B. (AgCl₂)⁻, (CuCl₂)⁻, (SnCl₄)⁻, (PbCl₄)⁻ vorliegen. Aus verdünnten Lösungen werden mit dem Gold die schwerlöslichen Verunreinigungen, wie z.B. AgCl, CuCl, SnO(OH), PbCl₂ ausgefällt.

Die Fällung wird durch Messung des Redoxpotentials überwacht und durch geeignete Zudosierung des Reduktionsmittels, insbesondere der Natriumbisulfitlösung gesteuert.

Nach dem Fällen des Goldes wird dieses vorzugsweise zunächst filtriert und anschließend mit halbkonzentrierter Salzsäure und entionisiertem Wasser gewaschen. Anschließend kann das Gold noch mit einer alkalischen Cyanidlösung gewaschen werden, die neben Anteilen an Gold auch eventuell noch verbliebene Spuren von Ni, Cu, Ag, Sn, und Pb aufnimmt. Zudem werden auch eventuell noch vorhandene Reste an organischen Komponenten absorbiert. Durch das Waschen mit einer alkalischen Cyanidlösung können Reste an organischen Komponenten absorbiert werden und eventuell verbliebene Spuren von Ni, Cu, Ag, Sn und Pb entfernt werden.

Das Gold wird nach dem Waschen beispielsweise bei etwa 140 °C getrocknet und anschließend der weiteren Verwendung zugeführt.

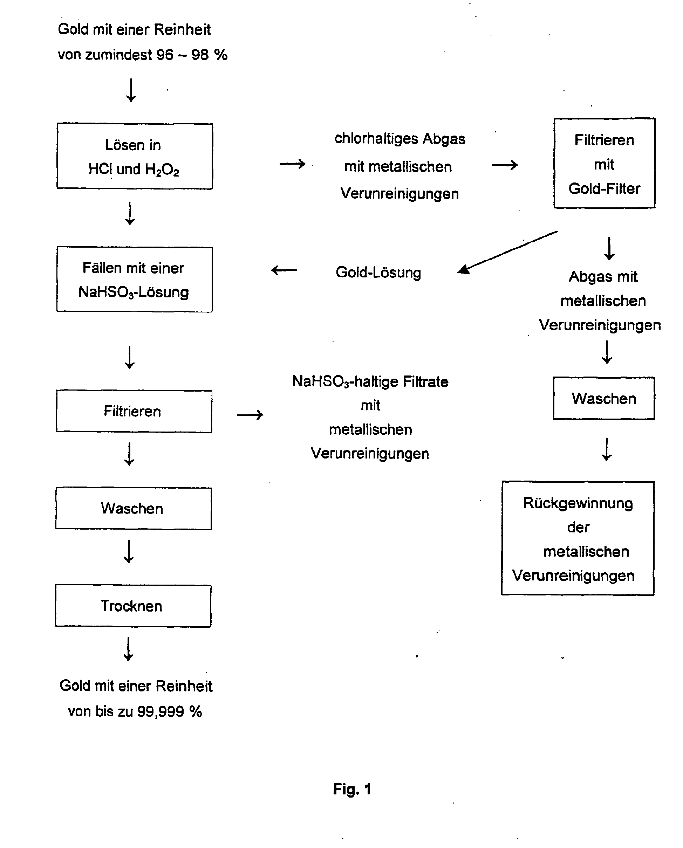

Dieses erfindungsgemäße Raffinationsverfahren ist in dem Flussdiagramm in Fig. 1 noch einmal zusammenfassend schematisch dargestellt.

Für das erfindungsgemäße Raffinationsverfahren wird vorzugweise pulverförmiges Gold mit einer Ausgangs-Reinheit von zumindest 96 - 98 % und einer Korngröße von 10 - 1000 Mikrometer, insbesondere 10 - 200 Mikrometer, verwendet. Aus diesem Ausgangsmaterial, das insbesondere Verunreinigungen an Cu, Ni, Ag, Pd, Zn, Sn, Pb, Fe, Cr, Be und/oder Co umfassen kann, kann auf die erfindungsgemäße Art und Weise hochreines Gold bis zu einer Reinheit von bis zu 99,999 % gewonnen werden. Diese Verunreinigungen können dabei entweder jeweils für sich oder aber auch in einer beliebigen Kombination bis zu einer Gesamtkonzentration von etwa 4 - 5 % in dem zu raffinierenden Ausgangsmaterial vorhanden sein. Das Verfahren ist daher insbesondere für die Raffination des bei der Goldelektrolyse aus Cyanidlösungen gewonnen Goldpulvers geeignet. Es ist jedoch selbstverständlich auch für geignet zerkleinertes oder granuliertes Gold aus einer ganzen Reihe anderer Ausgangsmaterialien einsetzbar. Es ist zudem auch zur Raffination von Goldfolien, feinen Golddrähten oder dergleichen geeignet.

Für sämtliche Verfahrensschritte können sehr kostengünstige, handelsübliche Chemikalien mit einer Reinheit von "Chemisch rein" eingesetzt werden. die gegebenenfalls auch mehrfach verwendbar sind. Die Verfahrensabläufe sind zudem sowohl bezüglich des erforderlichen apparativen Aufwandes als auch ihrer Durchführung recht einfach und gut zu automatisieren, so dass sich das erfindungsgemäße Raffinationsverfahren als wirtschaftlich sehr günstig erweist. Durch seine geringe Umweltbelastung erweist es sich darüber hinaus auch unter ökologischen Gesichtspunkten als äußerst günstig.

Weitere Merkmale und Vorteile der vorliegenden Erfindung ergeben sich nicht nur aus den zugehörenden Ansprüchen - für sich und/oder in Kombination - sondern auch aus der nachfolgenden Beschreibung bevorzugter erfindungsgemäßer Ausführungsbeispiele.

Bei dem ersten Ausführungsbeispiel werden 6400 g feinkörniges Goldpulver mit einer Reinheit von 97,1 %, das durch Goldelektrolyse aus Cyanidlösungen gewonnen wurde und Verunreinigungen an Cu, Ni, Ag, Pd, Sn und Pb enthält, in einer Lösesäule in zahlreichen aufeinanderfolgenden Behandlungsschritten jeweils abwechselnd mit 36 %-iger Salzsäure und 34 %-igem Wasserstoffperoxid behandelt, die in kleinen Mengen zudosiert werden. Für diesen Behandlungsschritt ist handelsübliche Salzsäure mit einer Konzentration von etwa 18 - 36 % und handelsübliches Wasserstoffperoxid mit einer Konzentration von etwa 17 - 35 % einsetzbar. Die hierbei jeweils zudosierten Volumina richten sich nach den Konzentrationen und nach dem Goldinhalt in der Lösesäule. Sie betragen im vorliegenden Fall zu Beginn der Behandlung jeweils 300 ml und werden dann mit der Abnahme des Goldinhaltes in der Lösesäule allmählich verringert. Es entstehen Goldlösungen mit einem hohen Goldgehalt von etwa 200 g/l in Form der Tetrachlorgoldsäure. Diese Goldlösungen fließen in eine Vorlage, die gewechselt wird, wenn sich nach Zudosierung einer hinreichend hohen Menge an Salzsäure und Wasserstoffperoxid 5 I angesammelt haben. Die entnommene Lösung wird anschließend auf ihre chemische Zusammensetzung hin untersucht, wobei sich die sich die in der folgenden Tabelle 1 zusammengestellten Resultate ergeben:

**Tab. 1**

| Goldlösung Nr. | Au (%) | Cu (%) | Ni (%) | Ag (%) | Pd (%) | Sn (%) | Pb (%) |
|---|---|---|---|---|---|---|---|
| 1 | 93,23 | 2,92 | 0,51 | 0,024 | 0,0015 | 0,235 | 3,08 |
| 2 | 98,73 | 0,32 | 0,076 | 0,0207 | 0,0013 | 0,0435 | 0,808 |
| 3 | 99,32 | 0,11 | 0,025 | 0,0137 | 0,0003 | 0,0308 | 0,500 |
| 4 | 99,77 | 0,07 | 0,0048 | 0,0048 | 0,0001 | 0,0197 | 0,1356 |
| 5 | 99,91 | 0,04 | 0,0022 | 0,0022 | 0,0003 | 0,0147 | 0,0346 |
| 6 | 99,89 | 0,035 | 0,0038 | 0,0139 | 0,0003 | 0,0224 | 0,0306 |

Im ersten Behandlungsschritt wird das Gold, wie sich optisch gut verfolgen lässt, zunächst durch die Salzsäure gelöst und nach Bildung einer Goldlösung, die durch das bei dieser Reaktion gebildete Wasser einen höheren pH-Wert von etwa 2 - 3 besitzt, durch das Wasserstoffperoxid reduziert und in sehr voluminöser, teilweise schwammartiger Form teilweise gefällt. Das Wasserstoffperoxid wird solange zum Lösen verbraucht, bis ein pH-Wert von etwa 2 - 3 erreicht wird, dann erfolgt eine anteilige Reduktion des gelösten Goldes. Gemeinsam mit dem Gold werden zunächst bevorzugt auch die im Ausgangsmaterial enthaltenen metallischen Verunreinigungen gelöst, die sich in der salzsauren Goldlösung ansammeln. Das im ersten Behandlungsschritt ausgefällte Gold wird bei der Fortsetzung des Lösevorgangs infolge seiner großen Oberfläche im zweiten Behandlungsschrittt bevorzugt durch die Salzsäure und das Wasserstoffperoxid gelöst. Während der nachfolgenden Behandlung wiederholt sich immer wieder das Lösen des größeren Anteils an Gold und die Fällung eines Anteils des gelösten Goldes beim getrennten Zudosieren von Salzsäure und Wasserstoffperoxid.

Durch die anfängliche bevorzugte Abreicherung der im Ausgangsmaterial enthaltenen metallischen Verunreinigungen und ihre Anreicherung in der entstehenden Goldlösung ist die Reinheit der ersten entnommenen Goldlösung mit 93,23 % zunächst noch etwas niedriger als die Ausgangsreinheit des zu raffinierenden Goldes von 97,1 %.

Nach der Abnahme der nächsten 5 I an Goldlösung erhält mnan bei der Analyse dieser Lösung eine Goldkonzentration von 98,73 % Die Goldlösung enthält also bereits deutlich weniger metallische Verunreinigungen und eine höhere Reinheit als die erste Goldlösung und als das Ausgangsgold.

Durch die ständige Wiederholung von Lösen und teilweisem Fällen erfolgt eine fortlaufende Raffination, so dass die mit zunehmender Anzahl an Behandlungsschritten entnommenen Goldlösungen immer weniger metallische Verunreinigungen und Gold einer immer höheren Reinheit enthalten, die bis zu einem Maximalwert von 99,91 % bei der fünften entnommenen Charge ansteigt.

Bei der sechsten und letzten Goldlösung des vorliegenden Ausführungsbeipiels lässt der Reinigungseffekt in der Säule offensichtlich wieder etwas nach. Die Goldlösung besitzt mit 99,89 % eine etwas geringere Reinheit als die fünfte Goldlösung mit 99,91 %, während gleichzeitig die Konzentration an Ag, Sn und Ni in der Lösung wieder etwas ansteigt. Diese Abschwächung des Reinigungseffektes kann jedoch durch Verwendung einer Lösesäule mit einem etwas geringeren Durchmesser und/oder mit einem kegelförmigen Auslauf übenrvunden werden.

Die Lösesäule ist über eine erste Abgasleitung mit einer Filtereinrichtung verbunden, die ein geschlossenes filterförmiges Gefäß mit einem Durchmesser von etwa 400 mm umfasst, in dem sich eine dünne Schicht feinkörnigen Goldpulvers des bei dem vorliegenden Ausführungsbeispiel verwendeten Ausgangsmaterials befindet. Um ein eventuelles Verstopfen des filterförmigen Gefäßes zu vermeiden, wird dieses einfach mit konzentrierter Salzsäure angefeuchtet.

Die durch die Reaktion der Salzsäure mit dem Wasserstoffperoxid in der Lösesäule freiwerdenden chlorhaltigen Abgase strömen somit über die erste Abgasleitung durch die dünne Goldschicht in dem Gefäß. Dort wird das Chlor, wie in der Beschreibungseinleitung bereits ausführlich dargestellt wurde, durch exotherme Umsetzung mit dem feinkörnigen Goldpulver zu Goldchlorid aus dem Abgas abgereichert. Hierdurch entsteht eine hochkonzentrierte Goldlösung, die einen Gehalt von 500 - 600 g/l Gold und einen pH-Wert von -1,0 bis - 1,3 besitzt. Diese Goldlösung wird auf die nachstehend noch beschriebene erfindungsgemäße Art und Weise weiterbehandelt (Fällung des Goldes bei kontrolliertem Potential), wodurch hochreines Gold mit einer Reinheit von 99,994 - 99,999 % gewonnen wird.

Wie oben bereits erwähnt wurde, enthält das chlorhaltige Abgas aus der Lösesäule auch einen Teil der aus dem Gold abgereicherten metallischen Verunreinigungen, die bei den sich einstellenden hohen Reaktionstemperaturen in der Filtereinrichtung nicht zusammen mit dem Chlor aus dem Gasstrom abgereichert und zurückgehalten werden, sondern stattdessen im wesentlichen in dem vom Chlor gereinigten Abgasstrom verbleiben. Die Filtereinrichtung ist daher über eine zweite Abgasleitung mit einem mit Wasser gefüllten Waschgefäß verbunden, durch welches das vom Chlor gereinigte Abgas nach dem Passieren der Filtereinrichtung strömt. Die in dem Gasstrom enthaltenen metallischen Verunreinigungen, wie z.B. abdestiliertes Silberchlorid, werden dort aus dem Gasstrom ausgewaschen und anschließend mit bekannten Methoden aus dem Waschwasser zurückgewonnen.

**Tab. 2**

| Goldlösung Nr. | Au (%) | Cu (%) | Ni (%) | Ag (%) | Pd (%) | Sn (%) | Pb (%) |
|---|---|---|---|---|---|---|---|
| 1 | 98,08 | 1,217 | 0,197 | 0,066 | 0,0310 | 0,839 | 0,327 |
| 2 | 99,54 | 0,265 | 0,051 | 0,030 | 0,0060 | 0,0166 | 0,086 |
| 3 | 99,77 | 0,154 | 0,020 | 0,020 | 0,0040 | 0,0128 | 0,040 |
| 4 | 99,78 | 0,140 | 0,016 | 0,015 | 0,0030 | 0,0133 | 0,036 |
| 5 | 99,74 | 0,079 | 0,009 | 0,021 | 0,0020 | 0,0142 | 0,131 |
| 6 | 99,94 | 0,027 | 0,003 | 0,007 | 0,0004 | 0,0050 | 0,0119 |

Bei einem zweiten Ausführungsbeispiel werden 6836 g feinkörniges Goldpulver mit einer Reinheit von 99,36 % entsprechend dem ersten Ausführungsbeispiel in der Lösesäule behandelt. Hierbei ergeben sich die in der obigen Tabelle 2 zusammengestellten Resultate.

Auch bei diesem Ausführungsbeispiel sammeln sich die im Ausgangsmaterial enthaltenen metallischen Verunreinigungen zu Beginn der Raffination wiederum zunächst bevorzugt in der Goldlösung, so dass die Reinheit der ersten Goldlösung mit 98,08 % niedriger ist als die Ausgangsreinheit von 99,36 %. Bis zur sechsten Charge steigt die Reinheit dann jedoch bis auf einen maximalen Endwert von 99,94 % an.

Beim Lösen des Goldes treten bei allen Ausführungsbeispielen in der Lösesäule Reaktionstemperaturen von mehr als etwa 100 °C auf. Bei diesen hohen Temperaturen wird, wie in der Beschreibungseinleitung bereits ausführlich dargestellt wurde, ein Teil der im Gold enthaltenen unerwünschten metallischen Verunreinigungen aus dem Gold abgereichert und zusammen mit dem freiwerdenden Chlor als Abgas abgeführt. Zur näheren Untersuchung dieses Effektes werden daher in einem dritten Ausführungsbeispiel 8276 g metallisch verunreinigtes Goldpulver auf die beschriebene Art und Weise in der Lösesäule gelöst und die Konzentration der Verunreinigungen im Ausgangsmaterial und in der Goldlösung bestimmt. Das Ausgangsmaterial enthält insgesamt 166,92 g (2,02 %) an metallischen Verunreinigungen, die sich aus 129,2 g (1,56 %) Kupfer, 13,47 g (0,16 %) Nickel, 1,38 g (0,02 %) Silber, 0,07 g (0,001 %) Palladium, 20,1 g (0,24 %) Zinn und 2,70 g (0,03 %) Blei zusammensetzen. In der Goldlösung hingegen finden sich nur 114,63 g Kupfer, 12,45 g Nickel, 0,47 g Silber, 0,08 g Palladium, 11,61 g Zinn und 1,69 g Blei, so dass die Abreicherung über das Abgas bei Zinn etwa 43 %, bei Blei 37 % und bei Silber 34 % beträgt. Bei Kupfer und Nickel werden auf diese Art und Weise immerhin noch etwa 12 % bzw. 8 % abgeführt, während Palladium bei den vorliegenden Reaktionsbedingungen vollständig in der salzsauren Goldlösung gelöst und nicht über das freiwerdende chlorhaltige Abgas mit abgeführt wird.

In einem vierten Ausführungsbeispiel werden 6945 g feinkörniges Goldpulver mit einer Reinheit von 97,80 % auf die beschriebene Art und Weise in der Lösesäule gelöst und die Konzentration der Verunreinigungen im Ausgangsmaterial und in der Goldlösung bestimmt, um wiederum den Anteil der über den Gasstrom abgeführten metallischen Verunreinigungen im Vergleich zu den sich in den Goldlöungen und dem Ausgangsmaterial befindenden metallischen Verunreinigungen zu ermitteln. Das Ausgangsmaterial ist mit Kupfer (1,86 %, 129,2 g), Nickel (0,22 %, 15,2 g), Silber (0,044 %, 3,04g), Palladium (0,009 %, 0,63 g), Zinn (0,30 %, 20,8 g), Blei (0,05 %, 3,4 g), Zink (0,003 %, 0,19 g), Eisen (0,005 %, 0,36 g), Chrom (0,001 %, 0,05 g) und Beryllium (0,001 %, 0,05 g) werunreinigt. Von diesen Ausgangs-Verunreinigungen befinden sich 88,7 % (114,6 g) Kupfer, 49,3 % (7,5 g) Nickel, 15,5 % (0,47 g) Silber, 12,7 % (0,08 g) Palladium, 51 % (10,6 g) Zinn, 50 % (1,7 g) Blei, 0 % Zink, 0 % Eisen, 0 % Chrom und 4 % (0,002 g) Beryllium in den entnommenen Goldlösungen, während der Rest über das Abgas abgeführt wird. Bei den angegebenen Reaktionsbedingungen verbleiben das Nickel, Zinn und Blei somit etwa zur Hälfte in Lösung, während die andere Hälfte über das Abgas abgeführt wird. Kupfer, Silber und Palladium werden hingegen bereits zu etwa 85 - 90 %, Beryllium zu etwa 96 % und das Eisen, Zink und Chrom im wesentlichen sogar vollständig über das Abgas abgeführt.

Diese Abreicherung der metallischen Verunreinigungen in der Gasphase ist von dem verwendeten Salzsäure/Wasserstoffperoxid-Mischungsverhältnis abhängig. Beim dritten Ausführungsbeispiel beträgt dieses Mischungsverhältnis 2:1, während es beim vierten Ausführungsbeispiel 1:1 beträgt.

Der Einfluß der hohen Reaktionstemperaturen auf die Abreichung der metallischen Verunreinigungen über das Abgas kann durch entsprechende wärmetechnische Maßnahmen, wie z.B. eine gezielte Beheizung der Lösesäule bis zu einem entsprechenden Temperaturniveau und eine Wärmeisolierung diese Säule, vorteilhaft ausgenutzt und unter Ausnutzung der unterschiedlichen physikalischen Eigenschaften der einzelnen Verunreinigungen noch gesteigert und in gewissen Grenzen bedarfsgerecht gesteuert werden.

Die festgestellte starke Abreicherung von Silber, Zinn, Palladium und Blei ist für das vorliegende Verfahren besonders wichtig, da sich diese Spurenverunreinigungen üblicherweise nur sehr schwer aus Gold abtrennen lassen. Bekannt ist die Abtrennung von Silber aus Gold nach dem Miller-Verfahren, das jedoch bei einem wirtschaftlich sehr viel ungünstigeren, wesentlich höheren Temperturniveau von etwa 1000 °C unter Einleitung von Chlor betrieben wird. Im vorliegenden Fall hingegen destillieren diese unerwünschten Verunreinigungen bei der erfindungsgemäßen Behandlung des Goldes mit Salzsäure und Wasserstoffperoxid zusammmen mit der Salzsäure und dem Chlor bereits bei wesentlich niedrigeren Temperaturen von etwa 100 °C ab, die zudem auch noch durch die beim Lösen des Goldes freiwerdende Reaktionswärme automatisch erzeugt werden, ohne dass es hierfür einer zusätzlichen, externen Energiezufuhr bedürfte. Diese wird im vorliegenden Fall - bei einem allerdings entsprechend wesentlich geringeren Energie- und Kostenaufwand - höchstens zur bedarfsgerechten Steuerung des Lösevorgangs verwendet, so dass das erfindungsgemäße Verfahren ein sehr viel einfachere und kostengünstigere Möglichkeit für eine Gold-Silber-Scheidung als das Miller-Verfahren eröffnet. Diese wirtschaftlichen Vorteile des erfindungsgemäßen Verfahrens werden noch durch die Verwendung kostengünstiger handelsüblicher Chemikalien unter Ausnutzung eines gleichzeitig sehr einfachen, ökologisch unbedenklichen und gut zu automatisierenden Verfahrensablaufs unterstützt.

Da sehr viele Goldlegierungen Silber als Legierungsmaterial enthalten, das sich bei einem Materialrecycling nur sehr schwer wieder aus den Goldlegierungen abscheiden läßt, wird dessen Abreicherung in einem weiteren Ausführungsbeispiel anhand zweier Goldlegierungen mit unterschiedlichen Silbergehalten von 0,59 % bzw. 3,9 % noch einmal näher untersucht. Die beiden Goldlegierungen werden wiederum auf die beschriebene Art und Weise mit Salzsäure und Wasserstoffperoxid in der Lösesäule behandelt. Es zeigt sich, daß mit ansteigendem Silbergehalt in der Ausgangslegierung die prozentuale Abreicherung an Silber ansteigt. Die erste Goldlegierung mit 0,59 % Silber ergibt in der Goldlösung einen Silbergehalt von 0,009 %, während die zweite Goldlegierung mit 3,9 % Silber einen Silbergehalt von nur 0,005 % ergibt.

Wie oben bereits beschrieben wurde, wird das gelöste Gold durch Zudosierung einer Natriumbisulfitlösung ausgefällt, die unter Vermeidung eines Natriumbisulfit-Überschusses mit hoher Geschwindigkeit in die Goldlösung eingerührt wird. Der Goldgehalt in der Lösung fällt hierbei auf weniger als etwa 10 mg/l ab. Die Fällung wird durch Messung des Redoxpotentials überwacht und durch geeignete Zudosierung der Natriumbisulfitlösung gesteuert.

Zur Fällung des Goldes können jedoch gegebenenfalls auch andere geeignete Fällungsmittel, wie z.B. Oxalsäure, Eisen-II-sulfat, Hydrazin und Salze des Hydrazins, verwendet werden. Hydrazin wird bei der Anwesenheit von Kupfer und Blei angewendet, während Oxalsäure und Eisen-II-sulfat bei der Anwesenheit von Platinmetallen angewendet werden.

Nach dem Fällen des Goldes wird dieses zunächst filtriert, wobei man NaHSO₃-haltige Filtrate mit metallischen Verunreinigungen erhält. Anschließend wird es mit halbkonzentrierter Salzsäure behandelt und mit entionisiertem Wasser "chloridfrei gewaschen". Das Gold kann zudem auch noch mit einer alkalischen Cyanidlösung gewaschen werden, die neben Anteilen an Gold auch eventuell noch verbliebene Spuren an metallischen Verunreinigungen aufnimmt. Zudem werden hierbei auch eventuell noch vorhandene Reste an organischen Komponenten absorbiert.

Das Gold wird nach dem Waschen bei etwa 140 °C getrocknet und anschließend der weiteren Verwendung zugeführt.

Jeder dieser Behandlungs- oder Bearbeitungsschrite schließt eine Teilraffination ein. Durch eine fraktionsweise Abnahme einzelner Goldmengen kann Gold mit unterschiedlicher Reinheit ausgebracht werden. Der Einfluß des Lösens, des Fällens aus salzsaurer Lösung und des Waschens mit alkalicher Cyanidlösung auf die Goldkonzentration wird in einem fünften Ausführungsbeisiel anhand der erfindungsgemäßen Raffination von 7945 g pulverförmigen Goldes mit einer Reinheit von 99,4 % untersucht. Hierbei ergeben sich die in der folgenden Tabelle 3 zusammengestellten Resultate, wobei die einzelnen Fraktionen entsprechend der jeweils zugeordneten Goldlösungen nummeriert sind:

**Tab. 3**

| Fraktion Nr. | Menge (g) | gelöst | Au (%) gefällt | gewaschen |
|---|---|---|---|---|
| 1 | 1430 | 98,29 | 99,920 | 99,995 |
| 2 | 1565 | 99,62 | 99,980 | 99,994 |
| 3 | 1406 | 99,75 | 99,990 | 99,995 |
| 4 | 894 | 99,82 | 99,990 | 99,995 |
| 5 | 944 | 99,88 | 99,990 | 99,996 |
| 6 | 562 | 99,87 | 99,996 | 99,997 |

**Tab. 4**

| Fraktion Nr. | Menge (g) | gelöst | Au (%) gefällt | gewaschen |
|---|---|---|---|---|
| 1 | 1427 | 98,91 | 99,982 | 99,990 |
| 2 | 1566 | 99,64 | 99,989 | 99,992 |
| 3 | 1389 | 99,78 | 99,985 | 99,992 |
| 4 | 853 | 99,83 | 99,990 | 99,995 |
| 5 | 750 | 99,89 | 99,991 | 99,995 |
| 6 | 949 | 99,87 | 99,992 | 99,996 |

Bei einem sechsten Ausführungsbeisiel werden 6934 g pulverförmigen Goldes mit einer Reinheit von 99,12 % untersucht. Hierbei ergeben sich die in der obigen Tabelle 4 zusammengestellten Resultate.

Für die Gewinnung von hochreinem Gold ist eine weitere Umfällungsstufe notwendig, wobei mit Erhöhung der Reinheitsanforderungen auch die Anforderungen an die Bearbeitung, die Apparatur sowie an die Reinheit der eingesetzten Chemikalien und der Arbeitsumgebung ansteigen.

In einem siebten und letzten Ausführungsbeispiel werden 10114 g Goldpulver mit einer Reinheit von 99,99 % auf die oben beschriebene erfindungsgemäße Art und Weise mit Salzsäure und Wasserstoffperoxid gelöst, mit Natreiumbisulfitlösung bei kontrolliertem Potential gefällt und nach dem "chloridfrei waschen" mit halbkonzentrierter Salzsäure und entionisiertem Wasser abschließend noch mit einer alkalischen Cyanidlösung behandelt. Aus dem mit Cu, Ni, Ag, Pd, Zn, Sn, Pb, Cr, Be, und Co verunreinigten Ausgansmaterial werden hierdurch 10000 g Gold mit einer Reinheit von 99,999 % gewonnen.

Bei allen Ausführungsbeispielen wird als Ausgangsmaterial für die Raffination metallisch verunreinigtes Goldpulver verwendet, das durch elektrolytische Abscheidung aus Cyanidlösungen gewonnen wurde und ursprünglich aus Elektronikschrott stammt, von dem es mittels der Cyanidlösungen abgelöst wurde. Es kann jedoch selbstverständlich auch Goldpulver oder geeignet zerkleinertes oder granuliertes Ausgangsmaterial anderer Herkunft durch das erfindungsgemäße Raffinationsverfahren bis zum Erreichen des gewünschten Reinheitsgrades gereinigt werden. Zudem können auch Gold-Kleinteile, folienartiges Gold, feine Golddrähte oder dergleichen durch das erfindungsgemäße Verfahren raffiniert werden.

## Patentansprüche

1. Verfahren zur Feinstraffination metallisch verunreinigten Goldes, insbesondere pulverförmiges, zerkleinertes, kleinteiliges, folienartiges oder drahtförmiges Gold durch:
- Lösen des Goldes in Salzsäure und Wasserstoffperoxid;
- Fällen des gelösten Goldes; und
- Waschen des gefällten Goldes,
**dadurch gekennzeichnet,**
**dass** das Lösen des Goldes bei Reaktionstemperaturen von mehr als 100 °C erfolgt und dass hierbei ein Teil der metallischen Verunreinigungen gasförmig aus dem Gold abgereichert und zusammen mit freiwerdendem Chlor als Abgas abgeführt wird.

2. Verfahren nach Anspruch 1,
**dadurch gekennzeichnet,**
**daß** durch sukzessives Zudosieren von Salzsäure und Wasserstoffperoxid Gold höherer Reinheit gewonnen wird.

3. Verfahren nach Anspruch 1 oder 2,
**dadurch gekennzeichnet,**
**daß** das Lösen des Goldes durch getrennte Zudosierung von Salzsäure und Wasserstoffperoxid und/oder über deren Mischungsverhältnis und/oder ihre Konzentration gesteuert wird.

4. Verfahren nach Anspruch 3,
**dadurch gekennzeichnet,**
**daß** ein Mischungsverhältnis von 1:1 eingestellt wird.

5. Verfahren nach Anspruch 3 oder 4,
**dadurch gekennzeichnet,**
**daß** Salzsäure mit einer Konzentration von 18 - 36 % und Wasserstoffperoxid mit einer Konzentration von 17 - 35 % verwendet wird.

6. Verfahren nach einem der vorhergehenden Ansprüche,
**dadurch gekennzeichnet,**
**daß** das Lösen des Goldes durch Wärmezufuhr und/oder Beeinflussung der Wärmeabfuhr gesteuert wird.

7. Verfahren nach einem der vorhergehenden Ansprüche,
**dadurch gekennzeichnet,**
**daß** das Lösen des Goldes in einer Säuleneinrichtung erfolgt.

8. Verfahren nach Anspruch 7,
**dadurch gekennzeichnet,**
**daß** je nach Größe, Korngröße oder Goldkonzentration Säuleneinrichtungen mit unterschiedlichen Durchmessern und/oder unterschiedlich gestalteten Ausläufen verwendet werden.

9. Verfahren nach einem der vorhergehenden Ansprüche,
**dadurch gekennzeichnet,**
**daß** das Gold durch Zudosierung einer Natriumbisulfitlösung aus der salzsauren Goldlösung gefällt wird.

10. Verfahren nach Anspruch 9,
**dadurch gekennzeichnet,**
**daß** die Natriumbisulfitlösung in die Goldlösung eingerührt wird.

11. Verfahren nach Anspruch 9 oder 10,
**dadurch gekennzeichnet,**
**daß** die Fällung durch Messung des Redoxpotentials überwacht und durch geeignete Zudosierung der Natriumbisulfitlösung gesteuert wird.

12. Verfahren nach einem der Ansprüche 9 - 11,
**dadurch gekennzeichnet,**
**daß** die Fällung des Goldes durch Vermeidung eines Überschusses an Natriumbisulfitlösung begünstigt wird.

13. Verfahren nach einem der vorhergehenden Ansprüche,
**dadurch gekennzeichnet,**
**daß** zur Fällung des Goldes Oxalsäure, Eisen-II-sulfat, Hydrazin oder Salze des Hydrazins verwendet werden.

14. Verfahren nach einem der vorhergehenden Ansprüche,
**dadurch gekennzeichnet,**
**daß** das Gold vor dem Waschen filtriert wird.

15. Verfahren nach einem der vorhergehenden Ansprüche,
**dadurch gekennzeichnet,**
**daß** das Waschen des Goldes ein Waschen mit halbkonzentrierter Salzsäure und mit entionisiertem Wasser umfasst.

16. Verfahren nach einem der vorhergehenden Ansprüche,
**dadurch gekennzeichnet,**
**daß** das Waschen des Goldes ein Waschen mit einer alkalischen Cyanidlösung umfasst.

17. Verfahren nach einem der vorhergehenden Ansprüche,
**dadurch gekennzeichnet,**
**daß** das Gold nach dem Waschen getrocknet wird.

18. Verfahren nach einem der vorhergehenden Ansprüche,
**dadurch gekennzeichnet,**
**daß** freiwerdendes chlorhaltiges Abgas zur Abreicherung des Chlors über eine Filtereinrichtung mit pulverförmigem Gold geleitet wird.

19. Verfahren nach Anspruch 18,
**dadurch gekennzeichnet,**
**daß** die Filtereinrichtung mit konzentrierter Salzsäure angefeuchtet wird.

20. Verfahren nach einem der vorhergehenden Ansprüche,
**dadurch gekennzeichnet,**
**daß** der Gasstrom durch eine Wascheinrichtung zur Abreicherung metallischer Verunreinigungen geleitet wird.

21. Verfahren nach Anspruch 20,
**dadurch gekennzeichnet,**
**daß** die abgereicherten metallischen Verunreinigungen aus der Wascheinrichtung zurückgewonnen werden.

22. Verfahren nach einem der vorhergehenden Ansprüche,
**dadurch gekennzeichnet,**
**daß** Gold mit einer Ausgangs-Reinheit von zumindest 96 - 98 % verwendet wird.

23. Verfahren nach einem der vorhergehenden Ansprüche,
**dadurch gekennzeichnet,**
**daß** Gold mit im wesentlichen gleicher Größe, Korngröße oder Goldkonzentration verwendet wird.

24. Verfahren nach einem der vorhergehenden Ansprüche,
**dadurch gekennzeichnet,**
**daß** Gold mit einer Korngröße von 10 -1000 Mikrometer verwendet wird.

25. Verfahren nach einem der vorhergehenden Ansprüche,
**dadurch gekennzeichnet,**
**daß** bei der Raffination Cu, Ni, Ag, Pd, Zn, Sn, Pb, Fe, Cr, Be und/oder Co aus dem Gold abgereichert werden.

## Claims

1. Method for the ultra fine refining of metallically contaminated gold, in particular gold in powder, comminuted, small-piece, foil or wire form, by:
- dissolving the gold in hydrochloric acid and hydrogen peroxide;
- precipitating the dissolved gold; and
- washing the precipitated gold,
**characterized in that** the dissolving of the gold takes place at reaction temperatures of more than 100°C, and **in that** in the process some of the metallic impurities are removed in gas form from the gold and discharged as waste gas together with chlorine that is released.

2. Method according to Claim 1, **characterized in that** gold of increasingly high purity is obtained by gradually adding hydrochloric acid and hydrogen peroxide.

3. Method according to Claim 1 or 2, **characterized in that** the dissolving of the gold is controlled by separate addition of hydrochloric acid and hydrogen peroxide and/or by means of the mixing ratio of these two substances and/or their concentration.

4. Method according to Claim 3, **characterized in that** a mixing ratio of 1:1 is set.

5. Method according to Claim 3 or 4, **characterized in that** hydrochloric acid with a concentration of 18-36% and hydrogen peroxide with a concentration of 17-35% are used.

6. Method according to one of the preceding claims, **characterized in that** the dissolving of the gold is controlled by the supply of heat and/or by influencing the dissipation of heat.

7. Method according to one of the preceding claims, **characterized in that** the dissolving of the gold takes place in a column device.

8. Method according to Claim 7, **characterized in that** column devices with different diameters and/or differently configured outlets are used according to the size, grain size or gold concentration.

9. Method according to one of the preceding claims, **characterized in that** the gold is precipitated out of the hydrochloric acid gold solution by adding a sodium bisulphite solution.

10. Method according to Claim 9, **characterized in that** the sodium bisulphite solution is stirred into the gold solution.

11. Method according to Claim 9 or 10, **characterized in that** the precipitation is monitored by measuring the redox potential and is controlled by suitable addition of the sodium bisulphite solution.

12. Method according to one of Claims 9-11, **characterized in that** the precipitation of the gold is boosted by avoiding an excess of sodium bisulphite solution.

13. Method according to one of the preceding claims, **characterized in that** oxalic acid, iron(II) sulphate, hydrazine or salts of hydrazine are used to precipitate the gold.

14. Method according to one of the preceding claims, **characterized in that** the gold is filtered before being washed.

15. Method according to one of the preceding claims, **characterized in that** the washing of the gold comprises washing with half-concentrated hydrochloric acid and with deionized water.

16. Method according to one of the preceding claims, **characterized in that** the washing of the gold comprises washing with an alkaline cyanide solution.

17. Method according to one of the preceding claims, **characterized in that** the gold is dried after it has been washed.

18. Method according to one of the preceding claims, **characterized in that** chlorine-containing waste gas which is released is passed through a filter device containing gold in powder form in order to remove the chlorine.

19. Method according to Claim 18, **characterized in that** the filter device is wetted with concentrated hydrochloric acid.

20. Method according to one of the preceding claims, **characterized in that** the gas stream is passed through a scrubbing device for removing metallic impurities.

21. Method according to Claim 20, **characterized in that** the metallic impurities which have been removed are recovered from the scrubbing device.

22. Method according to one of the preceding claims, **characterized in that** gold with an initial purity of at least 96-98% is used.

23. Method according to one of the preceding claims, **characterized in that** gold of substantially the same size, grain size or gold concentration is used.

24. Method according to one of the preceding claims, **characterized in that** gold with a grain size of 10-1000 micrometers is used.

25. Method according to one of the preceding claims, **characterized in that** during the refining Cu, Ni, Ag, Pd, Zn, Sn, Pb, Fe, Cr, Be and/or Co are removed from the gold.

## Revendications

1. Procédé pour le raffinage fin d'or comportant des impuretés métalliques, en particulier d'or en poudre, broyé, en petits fragments, en feuille ou sous forme de fil, par
- dissolution de l'or dans de l'acide chlorhydrique et du peroxyde d'hydrogène ;
- précipitation de l'or dissous ; et
- lavage de l'or précipité,
**caractérisé en ce que** la dissolution de l'or s'effectue à des températures de réaction de plus de 100 °C et **en ce qu'**une partie des impuretés est alors extraite de l'or, sous forme de gaz, et éliminée, conjointement avec du chlore libéré, sous forme de gaz rejeté.

2. Procédé selon la revendication 1, **caractérisé en ce qu'**on obtient une plus grande pureté par addition dosée successive d'acide chlorhydrique et de peroxyde d'hydrogène.

3. Procédé selon la revendication 1 ou 2, **caractérisé en ce que** la dissolution de l'or est réglée par addition dosée séparée d'acide chlorhydrique et de peroxyde d'hydrogène et/ou par leur rapport de mélange et/ou leur concentration.

4. Procédé selon la revendication 3, **caractérisé en ce qu'**on ajuste un rapport de mélange de 1:1.

5. Procédé selon la revendication 3 ou 4, **caractérisé en ce que** l'acide chlorhydrique est utilisé à une concentration de 18-36 % et le peroxyde d'hydrogène à une concentration de 17-35 %.

6. Procédé selon l'une quelconque des revendications précédentes, **caractérisé en ce que** la dissolution de l'or est réglée par apport de chaleur et/ou action sur l'élimination de la chaleur.

7. Procédé selon l'une quelconque des revendications précédentes, **caractérisé en ce que** la dissolution de l'or s'effectue dans un dispositif de type colonne.

8. Procédé selon la revendication 7, **caractérisé en ce qu'**en fonction de la taille, de la taille de grain ou de la concentration de l'or, on utilise des dispositifs de type colonne de différents diamètres et/ou à conduits de sortie de formes différentes.

9. Procédé selon l'une quelconque des revendications précédentes, **caractérisé en ce que** l'or est précipité à partir de la solution acidifiée avec de l'acide chlorhydrique par addition dosée d'une solution de bisulfite de sodium.

10. Procédé selon la revendication 9, **caractérisé en ce que** la solution de bisulfite de sodium est délayée dans la solution d'or.

11. Procédé selon la revendication 9 ou 10,
**caractérisé en ce que** la précipitation est suivie par mesure du potentiel redox et réglée par addition dosée appropriée de la solution de bisulfite de sodium.

12. Procédé selon l'une quelconque des revendications 9 à 11, **caractérisé en ce qu'**on favorise la précipitation de l'or en évitant un excès de solution de bisulfite de sodium.

13. Procédé selon l'une quelconque des revendications précédentes, **caractérisé en ce** pour la précipitation de l'or on utilise de l'acide oxalique, du sulfate ferreux, de l'hydrazine ou des sels de l'hydrazine.

14. Procédé selon l'une quelconque des revendications précédentes, **caractérisé en ce que** l'or est filtré avant le lavage.

15. Procédé selon l'une quelconque des revendications précédentes, **caractérisé en ce que** le lavage de l'or comprend un lavage avec de l'acide chlorhydrique à moitié concentré et avec de l'eau désionisée.

16. Procédé selon l'une quelconque des revendications précédentes, **caractérisé en ce que** le lavage de l'or comprend un lavage avec une solution alcaline de cyanure.

17. Procédé selon l'une quelconque des revendications précédentes, **caractérisé en ce que** l'or est séché après le lavage.

18. Procédé selon l'une quelconque des revendications précédentes, **caractérisé en ce que** le gaz rejeté contenant du chlore, qui est libéré, est envoyé à l'extraction du chlore, par l'intermédiaire d'un dispositif de filtration avec de l'or pulvérulent.

19. Procédé selon la revendication 18, **caractérisé en ce que** le dispositif de filtration est humecté avec de l'acide chlorhydrique concentré.

20. Procédé selon l'une quelconque des revendications précédentes, **caractérisé en ce que** le courant de gaz est envoyé par un dispositif de lavage à l'extraction d'impuretés métalliques.

21. Procédé selon la revendication 20, **caractérisé en ce que** les impuretés métalliques extraites sont récupérées du dispositif de lavage.

22. Procédé selon l'une quelconque des revendications précédentes, **caractérisé en ce qu'**on utilise de l'or ayant une pureté initiale d'au moins 96-98 %.

23. Procédé selon l'une quelconque des revendications précédentes, **caractérisé en ce qu'**on utilise de l'or ayant pratiquement la même taille, la même taille de grain ou la même concentration.

24. Procédé selon l'une quelconque des revendications précédentes, **caractérisé en ce qu'**on utilise de l'or ayant une taille de grain de 100-1000 µm.

25. Procédé selon l'une quelconque des revendications précédentes, **caractérisé en ce que** lors du raffinage Cu, Ni, Ag, Pd, Zn, Sn, Pb, Fe, Cr, Be et/ou Co sont extraits de l'or.
